# EUROPEAN PATENT SPECIFICATION

(11) **EP 1 868 307 B1**
(45) Date of publication and mention of the grant of the patent: **07.05.2014**
(21) Application number: 07008136.9
(22) Date of filing: 20.04.2007
(51) Int. Cl.: H04H 60/11, H04H 60/27, H04N 21/433, H04N 21/438, H04N 21/81

(54) **Transmitting and outputting content triggered by an event at the receiver**
Übertragung und Ausgabe von Inhalt aufgrund von einem Ereignis beim Empfänger
Transmission et affichage de contenu causé par un événement au récepteur

(30) Priority: 04.05.2006 KR 20060040660
(43) Date of publication of application: 19.12.2007
(73) Proprietor: LG Electronics Inc., Seoul 150-721 (KR)
(72) Inventor: Han, Seong Cheol, Gyeonggi-do (KR); Kwak, Jae Do, Seoul (KR); Yang, Seung Heon, Seoul (KR); Youn, Jong Keun, Gyeonggi-do (KR); Choi, Byoung Ho, Gyeonggi-do (KR); Kim, Jin Tae, Jeollabuk-do (KR); Jung, Mun Ho, Seoul (KR)
(74) Representative: Katérle, Axel

(56) References cited:
- EP-A1- 1 501 316
- EP-A1- 1 503 589
- EP-A2- 1 406 163
- EP-A2- 1 406 456
- WO-A1-2005/043783
- US-A1- 2001 048 463
- US-A1- 2003 095 177
- US-A1- 2004 244 037

## Description

### BACKGROUND OF THE INVENTION

### Field of the Invention

The present invention relates to an apparatus and method for transmitting content, an apparatus and method for outputting content, and a data structure for transmitting content.

### Discussion of the Related Art

A variety of content has been produced, as a terminal for receiving multimedia data has been developed. Hereinafter, the term "content(s)" indicates information and/or data, which is transmitted via a broadcast or communication network, and examples of such information can be letters, marks, audio and images, etc.

If a content provider such as a broadcaster, a communication service provider and so on, transmits certain content, for example advertisement content (e.g., advertisements, promotional videos, etc.), by way of a network, a user receives and outputs the content. The content may be produced by the content provider or another producer. For example, advertisement content may be produced by a provider of the content like a broadcaster or another producer such as an advertisement provider, and a user of the content watches or listens to the provided advertisement content.

If the content is received, a receiver such as a television, a mobile phone, etc., outputs the content. Also if the receiver has a function of a DVR (digital video recorder), the receiver can store and output the content later. Hereinafter, the DVR (digital video recorder) preferably means all the hardware or software platform which can store a digital content. Accordingly, the concept of the DVR(digital video recorder) covers at least one of a set top-box, a digital television set, and a PVR (personal video recorder).

For example, if content such as an advertisement content is transferred by way of a broadcast medium, a receiver, which has a function of DVR, stores the transferred content, and outputs the content selectively. But, according to this method of outputting the received content selectively, a conventional business model for advertisement can be ignored.

Particularly, since the receiver at the end user's side, which has a DVR function, can output the broadcast content excluding the advertisement content by this method, the content provider or content producer, and the advertisement content provider have a problem because the advertisement content is not viewed by the users. In other words, since an advertisement content which is transferred with the broadcast content (e.g., programs, movies, etc.), can be skipped by the DVR function, the advertisement content is not played to the users and thus the viewing and/or listening of the advertisement content by the users does not occur. As a result, advertisement effect cannot be realized.

A digital device like a mobile phone requires a booting time when the device is booted, and a termination time when the device is turned off. And, it takes some time for a terminal connected to a broadcast network or a communication network, to translate a broadcast program channel. It also takes some time for the terminal to connect to a wireless internet or receive an application via a network or load the application in the terminal. The term "terminal" is preferably used to refer to an apparatus for transmitting and receiving information and outputting the information in connection with a broadcast network or a communication network, herein.

Hereinafter, an application refers to a means that is embodied at the terminal, or that is a conceptual function itself, and can be embodied by a program or a source code. As described, an event such as turning on/off of the terminal, translation of a broadcast program channel, decoding of a received content, loading of a program, or attempting to connect to a wireless network, etc., can occur in the terminal. In these cases, the terminal cannot output the received content or the application during the occurrence of the event.

For example, if a digital television or a mobile communication terminal translates a program channel into another, it takes about 5 seconds during which a user cannot watch and listen to the new broadcast program. That is, during the occurrence of the event, the outputting of the broadcast program may not occur and as a result, the user may feel uncomfortable with not watching and listening to the program and may feel inconvenienced and annoyed during this time period.

US 2004/0244037 A1 may be construed to disclose a technique in which, in a broadcast using packet transmission, zapping-data and program data are packet-transmitted from a transmitting apparatus. A receiving apparatus receives and stores the data and zapping-data. Until the program data selected upon program reproduction becomes reproducible, zapping-data is reproduced, whereby the viewer can know the information about a program without waiting for a lapse of reproduction wait time after switching a program channel.

WO 2005/043783 A1 concerns a time slice system in which a first stream for burst transmitting a packet set and a second stream for continuously transmitting a packet at a rate suitable for a transmission rate required for a service are multiplexed with each other and then transmitted. During zapping, the second stream, which is constantly transmitted, is used to reproduce the contents, and after a completion of the zapping, the first stream, in which the packet is burst transmitted, is reproduced.

EP 1 503 589 A1 concerns an apparatus and method for providing advertisements on digital TV. The apparatus includes a system information processing unit for receiving system information data transmitted by a broadcast station and extracting channel information and advertisement data from the received system information data. The method includes the steps of receiving system information data transmitted by a broadcast station, extracting channel information and advertisement data from the received system information data and storing the extracted channel information and advertisement data, and displaying the stored channel information and advertisement data on screen when a user changes channels.

EP 1 501 316 A1 may be construed to disclose a technique in which, to a multimedia information file including three-dimensional image data, three-dimensional display control information is added that indicates an intended three-dimensional display method for the three-dimensional image data or a data format in which the data is recorded. A three-dimensional image reproduction apparatus performs conversion appropriate for data characteristics derived from the three-dimensional display control information and then provides display. Recorded three-dimensional image data is thus given versatility so that the same three-dimensional image data can be used commonly to different three-dimensional display schemes.

### SUMMARY OF THE INVENTION

According to the present invention, an apparatus and method for transmitting content, an apparatus and method for outputting content according to the independent claims are provided Preferably, a data structure for transmitting content is provided. The methods and apparatuses are meant to substantially obviate or address one or more problems due to limitations and disadvantages of the related art. Developments are set forth in the dependent claims.

An object of this invention is to provide a method for transmitting and outputting content and an apparatus for transmitting and outputting content, which provide convenience and comfort to viewers.

An another object of this invention is to provide a method for transmitting and outputting content and an apparatus for transmitting and outputting content, by which a transferor of the content controls whether the transmitted content is output at a receiver's side.

An another object of this invention is to provide a method for transmitting and outputting content and an apparatus for transmitting and outputting content, which can display content like advertisements, etc. when the event in the receiver of the content occurs.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

Preferably, a method for transmitting content is provided, including: generating content and content output information of the content, transforming the content and the content output information into a format of transmission data, and transmitting the transformed data, wherein the content output information defines an output condition of the content stored at a receiver, when a content output event happens at the receiver.

Preferably, there is provided a method for outputting content by a receiver of the content, the method comprising: receiving content and content output information of the content, storing the content and the content output information, and outputting the content in accordance with the content output information, wherein the content output information defines an output condition of the stored content, when a content output event happens at the receiver.

Preferably, there is provided an apparatus for outputting content, including: a signal receiving unit receiving an advertisement content and content output information of the advertisement content, a memory unit storing the content output information and the advertisement content in accordance with the content output information, a control unit controlling the stored advertisement content to be outputted in accordance with the content output information, when a content output event happens at the apparatus, and an output unit outputting the advertisement content as the control of the content control unit, wherein the content output information defines an output condition of the stored advertisement content, when the content output event happen at the apparatus.

Preferably, there is provided an apparatus for transmitting content, the apparatus comprising: a content memory unit storing content, a content information generating unit generating content information of the content, a transform unit transforming the content and the content information unit into a format of data, and a transmission unit for transmitting the transformed data, wherein the content output information defines an output condition of the content stored at a receiver, when a content output event happens at the receiver.

Preferably, there is a method for transmitting content, the method comprising: generating content output information of the content; and transmitting the content and the content output information as transmission data, wherein the content output information defines an output condition of the content to be selectively outputted at a receiver's side when a content output event occurs at the receiver's side.

Preferably, there is a method for outputting content by a receiver of the content, the method comprising: receiving content and content output information of the content; storing the content and the content output information, wherein the content output information defines an output condition of the content; and selectively outputting, by the receiver, the content in accordance with the content output information when a content output event occurs.

Preferably, there is an apparatus for transmitting content, the apparatus comprising: a memory unit to store content; a content information generating unit to generate content output information of the content; and a transmission unit to transmit the content and the content output information as transmission data, wherein the content output information defines an output condition of the content to be selectively outputted at a receiver's side when a content output event occurs at the receiver's side.

Preferably, there is an apparatus for outputting content, the apparatus comprising: a signal reception unit to receive the content and content output information of the content; a memory unit to store the content output information and the content wherein the content output information defines an output condition of the content; a control unit to control an output unit to selectively output the content in accordance with the content output information when a content output event occurs; and the output unit to output the content under control of the control unit.

Preferably, a data structure embodied on at least one computer-readable medium is provided, the data structure comprising: a first field to store header information associated with content; and a second field to store content output information of the content, wherein the content output information defines an output condition of the content to be selectively outputted at a receiver's side of the content when a content output event occurs at the receiver's side.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings;
Fig. 1 is an example of a data structure according to an embodiment of the present invention;
Fig. 2 is an example of an additional information field, in a case where content output information is included in the additional information field, according to an embodiment of the present invention;
Fig. 3A and Fig. 3B illustrate parts of the Multimedia Object Transfer (MOT) protocol;
Fig. 4 illustrates an apparatus for transmitting content in accordance with an embodiment of the present invention;
Fig. 5 shows a flow chart illustrating a method for transmitting content in accordance with an embodiment of the present invention;
Fig. 6 illustrates an apparatus for outputting content in accordance with an embodiment of the present invention; and
Fig. 7 shows a flowchart illustrating a method for outputting content in accordance with an embodiment of the present invention.

### DETAILED DESCRIPTION OF THE PREFERRED EMBODIMENTS

Reference will now be made in detail to the preferred embodiments of the present invention, examples of which are illustrated in the accompanying drawings. Wherever possible, the same reference numbers will be used throughout the drawings to refer to the same or like parts.

To describe the present invention easily, an example wherein a transmitting content is a broadcast advertisement content, and the advertisement content is a slide show including a plural of images, is discussed herein. However, the concept of present invention obviously is not limited thereto, and is fully and equally applicable to other types of content.

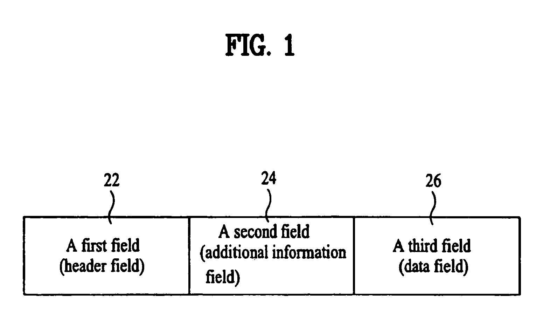

Fig. 1 is an example of a data structure according to an embodiment of the present invention. The data structure carries the content and other information.

Referring to Fig. 1, when broadcast data including an advertisement content is transmitted (e.g., from a transmitting side to a receiver side), additional information, concerning with the content, is also transmitted. For instance, the content provider such as a broadcast station includes content output information (additional information) to the broadcast data (content) and transmits such transmission data to a receiver. Here, the transmission data includes data transmitted over the Internet or other network, or non-broadcast type data. The receiver then selectively outputs the received content based on the received content output information associated with the content. As a result, the content provider can control the outputting of the content such as advertisement content at the receiver's side by using the content output information.

The example of the data structure in Fig. 1 includes a first field 22 for carrying information related to the data structure of the content, a second field 24 for carrying additional information for outputting the content, and a third field 26 for carrying the raw data of the broadcast content, i.e., the content itself. Examples of the content can be, but are not limited, still images, advertisements, logos, graphics, texts, icons, etc. For instance, the advertisement data can be carried in the third field 26 while additional information such as content output information for the advertisement data in the third field 26 can be carried in the second field 24.

The first field 22 can be named as a header field of data carrying the broadcast content. And, the third field 26 can be named as a data field or a body field. Since the terms may be called differently depending on the case, the terms used in the specification should be construed not only by their names, but by the meanings of the terms.

Hereinafter, the second field 24 is referred to as an additional information field for carrying the additional information. The additional information can include information about a kind of content or information related to outputting the content. Hereinafter, information, which can include an output condition of the content stored at a receiver, when the content output event occurs at the receiver, is referred to as content output information. The content output information may be included anywhere in the fields shown in Fig. 1, but can preferably be included in the additional information field 24. As shown in Fig. 1, when the content is transmitted (e.g., in the data field 26), the content output information can be generally transmitted together (e.g., in the additional information field 24), e.g., from the transmitter to the receiver.

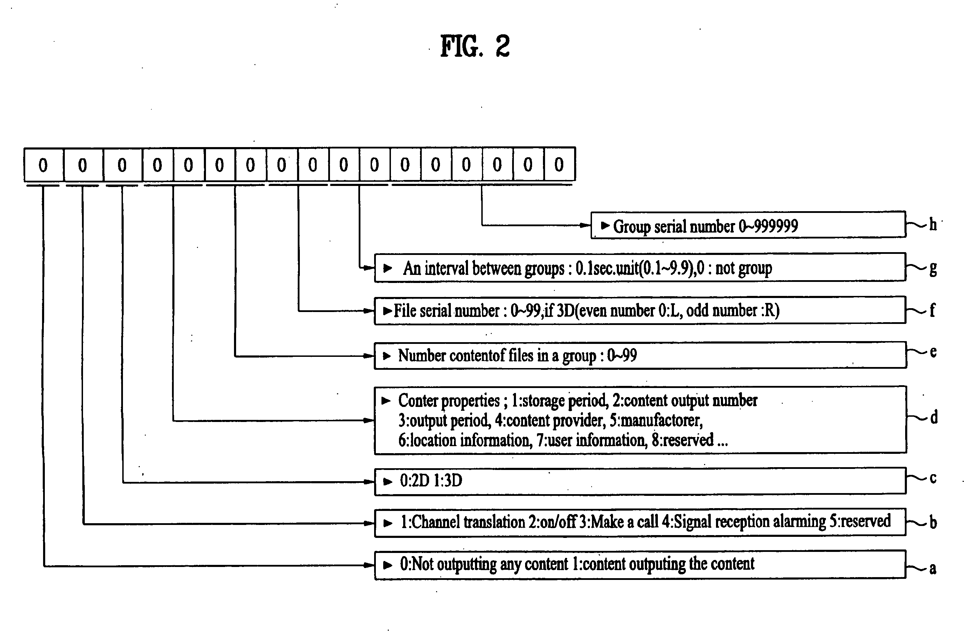

Fig. 2 is an example of the additional information field 24 in Fig. 1, in a case where the content output information is included in the additional information field. With reference to Fig. 2, the additional information field including the content output information, is described as an example. In Fig. 2, the additional information field is shown to include a plurality of fields or subfields (a)-(h). However, the additional information field can include one or more of the fields (a)-(h), and also other subfields can be included in the additional information field if needed. In another example, one or more of the fields (a)-(h) may be spread out within the data structure of the content, and may not be provided all in the additional information field. Still in another example, the content output information may not be transmitted with the content itself, but may be transmitted before or after the transmission of the content if needed.

As shown in Fig. 2, the content output information can include at least one of the plurality of fields (a)-(f). The first field (a) indicates whether or not the content is to be outputted at the content receiver when an event occurs in the content receiver. For instance, if a value of 1 (one) is established or indicated in the first field (a), then the stored content is to be outputted at the receiver of the content when an event occurs in the content receiver, as shown in the example of Fig. 2. On the contrary, if a value of 0 (zero) is established in the first field (a), then the content is not to be outputted at the content receiver even though the event occurs in the content receiver. Other variations are possible.

The second field (b) defines specific event(s) to occur the content receiver. For instance, if the event(s) specified in the second field (b) occurs and if the first field (a) indicates that the content is to be outputted, then the content receiver outputs (e.g., displays) the content in the content receiver.

In the examples of Fig. 2, the event which can trigger the outputting of the content depending on the information stored in the first field (a), is a channel translation event if the value in the second field (b) is 1 (one), or is turning on/off of the content receiver if the value in the second field(b) is 2 (two). The event is a call event, which means that the content receiver tries to make a call, if the value in the second field (b) is 3 (three). And, the event is alarming an arrival of a communication signal if the value in the second field (b) is 4 (four).

But, if another event occurs at the receiver, the event can be defined in the second field (b). As other examples, an event which is launching a new application on the content receiver, and an event which is generated by inputting a key of the user, may be defined. Also, an event, which is a signal power of the receiver going down below a predetermined threshold, may be defined in the second field (b). In this case, the content receiver outputs the content, which is received from the content provider and stored in the content receiver, in accordance with the content output information. Hereinafter, the event, which is identified in the second field (b) and occurs in the content receiver, may be referred to as a content output event.

When the content output event, which may be defined in the content output information, e.g., in the second field (b), happens at the content receiver, the content receiver outputs a received content according to the content output information, e.g., based on the value stored in the first field (a).

As described above, a slide show including a plurality of image files is assumed as content in the example of Fig. 2. the third field (c) defines a dimension of the content image. Binocular disparity is generated when one image which is reflected in human's left eye (it is named as the left eye image and written in subscript L, herein), and the other image, which is reflected in human's right eye (it is name as the right eye image and written in subscript R, herein) are different. And if the binocular disparity is generated and the left eye image and the right eye image are composed properly, the composed image can look like a three-dimensional image. In human's optics, if two images having the difference between two optic incidences are combined in the human's brain, the combined image looks like a three-dimensional image.

To use this principle, according to an embodiment the right eye image (R) and left eye image (L) of an image is prepared in the content transmitter, and the right eye image and the left eye image are composed or combined by the pixel in the content receiver. In order to compose/combine the two images, an interpolation method may be used, but other composing methods can be used. Also if three dimensional images are displayed in the receiver consecutively, moving three-dimensional images can be displayed at the receiver.

Returning to Fig. 2, a value of the third field (c) defines whether the content can look like three-dimensional images. In the example of Fig. 2, a two-dimensional content can be outputted at the receiver if the value of the third field (c) is 0 (zero), whereas a three-dimensional content can be outputted at the receiver if the value of the third field (c) is 1 (one). Other variations are possible.

The fourth field (d) defines properties of the content to be outputted at the receiver, when the content output events happen at the receiver. In the example of Fig. 2, the properties of the content, which can be identified in the fourth field (d), can include, but are not limited to, information representing a storage period identifying a period (or time duration) of storing the content in the content receiver (1), a content output number identifying the number of outputting the stored content (2), an output period identifying the time of the content to be outputted (3), a content provide identifying a content service provider (4), a manufacturer of the content receiver (5), location information of the content receiver (6), user information of the receiver (7), etc. Other properties and characteristics of the content may be set forth in the fourth field (d).

As mentioned, the content properties information (e.g., stored in the fourth field (d)) can provide a variety of information regarding the outputting of the content, because the content properties information includes information on content, information on a content receiver, and information on a user of a content receiver. For example, the storage period (1) represents a period for which a received content is to be stored in a receiver. The unit of the period can vary.

According to an embodiment, the content output number (2) represents how many stored content shall be outputted at a receiver. If the set content output number in the fourth field (d) equals the number of the content that is actually outputted at the receiver, then the stored content may be deleted in the memory of the content receiver. The outputting time of content (3) represents the time for which the content is to be outputted at the receiver, when the content output event happens at the receiver. The content service provider (4) represents information identifying the maker of the content, and the manufacturer of the content receiver (5) represents information identifying the manufacturer of the content receiver.

If at least one of the content service provider and the manufacturer of the content receiver is established or identified in the fourth field (d), whether the content is outputted or what kind of the content is outputted can vary in accordance with the established information in the fourth field (d).

According to an embodiment, the location information of the content receiver (6) represents geographical information like GPS (global positioning system) information of the receiver, etc. If the location information of the content receiver (6) is established in the fourth field (d), whether the content is outputted or what kind of the content is outputted can be varied with the established location information (6) in the fourth field (d). The user information of the content receiver (7) represents information on user(s) of the content receiver. Therefore a variety of content output conditions can be established.

According to an embodiment, one content may include one or more files, and multiple (e.g., several) files may constitute one group. For example, if the content is a slide show, several slide image files constitute one content group, and the slide show is outputted from the sliding image files in the content group. In this regard, the fifth field (e) represents the number of content files in a group. In the example of Fig. 2, the number of content files for outputting the content can be established from 0 to 99, when an event happens at a receiver. Other examples are possible.

The content output information may include the sixth field (f) which represents a serial number of content files in a group. The example of Fig. 2 discloses that the serial number of content files in a group can be established from 0 to 99. Also, if a displayed image is a three-dimensional image, the content output information can identify a serial number of two images which can make the outputted images look like a three-dimensional image. The example of Fig. 2 discloses that the odd-number represents a right eye image for a three-dimensional image, and the even-number represents a left eye image for a three-dimensional image.

The content output information may include the seventh field (g) which represents an interval by which contents of two or more groups are to be outputted. The value of the seventh field (g) is an interval between contents outputted by each group, and the example of Fig. 2 discloses that the value of the seventh field (g) is 0.1 second. In the example of Fig. 2, if the value of the seventh field (g) is 0, the contents are not outputted by the group.

The content output information may include the seventh field (h) which represents a serial number of a group. And, the serial number of the group can be established from 0 to 999999 in the example of Fig. 2.

Any data structure discussed above as shown in, e.g., Figs. 1-2, can be embodied on at least one computer-readable medium for subsequent processing. The computer-readable medium can be any type of storage or memory such as hard drive, RAM, ROM, PROM, etc. associated with one or more computers or computer-based devices such as transmitters or receivers, or can be a different storage medium such as a USB, magnetic disc, optical disc, magneto-optical disc, etc.

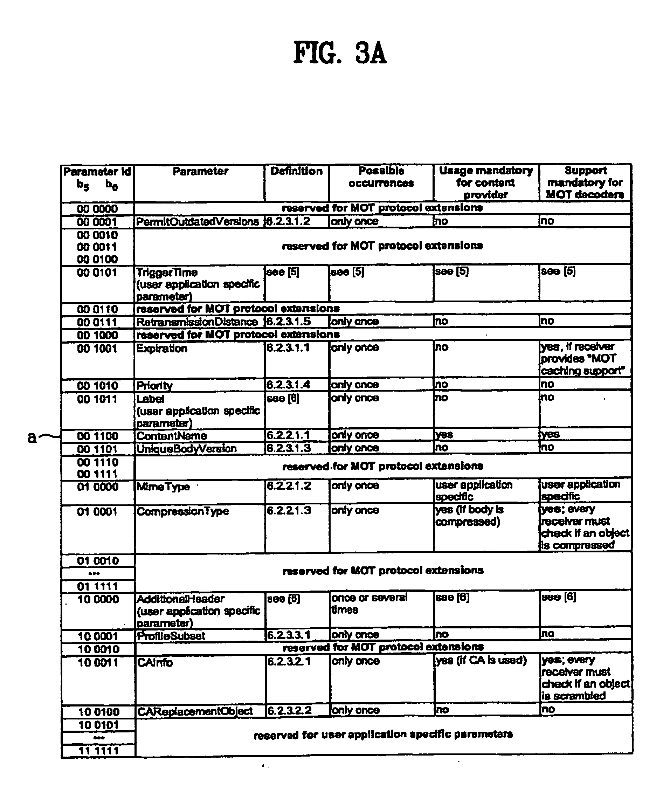

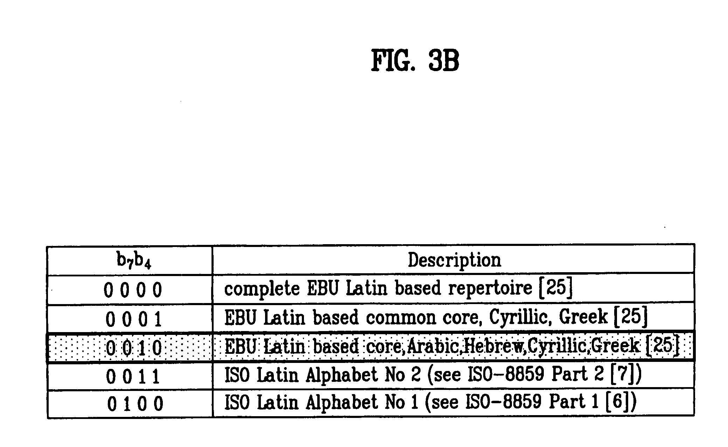

Fig. 3A and Fig. 3B illustrate a part of the Multimedia Object Transfer (MOT) protocol in which the present invention can be applied. The MOT protocol is one of broadcast regulations and communication regulations.

First, Fig 3A shows a part of data field which can be transmitted by the MOT protocol of the DAB (multimedia audio broadcasting) protocol following ETSI EN 301 234 V2.1.1.

Those fields described in Fig. 2, can be established in at least one reserved field or at least one user private field of the MOT protocol shown in Fig. 3A. The content output information, which is illustrated in Fig. 2, is defined or stored in a reserved field in the MOT protocol ("reserved for MOT protocol extensions" in Fig. 3A). Also the content output information may be established in a designated region in the MOT protocol, if only the designated region is not used.

The content output information is defined in a variable length of a data field of the MOT protocol. The variable length of the data field is more preferable than the fixed length of the data field, since the variable length of the data field can provide additional information.

In the example of Fig 3A, the content output information illustrated in Fig. 2 can be established in the ContentName field according to the MOT protocol. In the example of Fig 3B, as the specific indicator for the ContentName field, the data configured in the Arabic numerals can be established in the ContentName field, which is hatched, and is transmitted. The illustrated fields can be established as ASCII value, which is Arabic numerals.

If the raw data of the content and the content output information illustrated in Fig. 2, are established as the format of Fig. 3A, such as the ContentName field, the content receiver can be controlled to selectively output the content based on the content output information, when the content output event occurs at the receiver. The MOT protocol, which is a transmitting data format, is just an example, and the data illustrated in Fig. 2 can also be transmitted in other broadcast protocol or other communication protocol.

In another example, when transmitting the content output information to a receiver, the content output information may be established in the data field of the sub-channel, not in the main channel, and may be transmitted.

Also the content output information may be established in a format of a DATA broadcast such as the BIFS (BInary Format for Scenes) format, if transmitted by a DATA broadcast channel. And the content output information may be transmitted in other communication protocol of cable or wireless network.

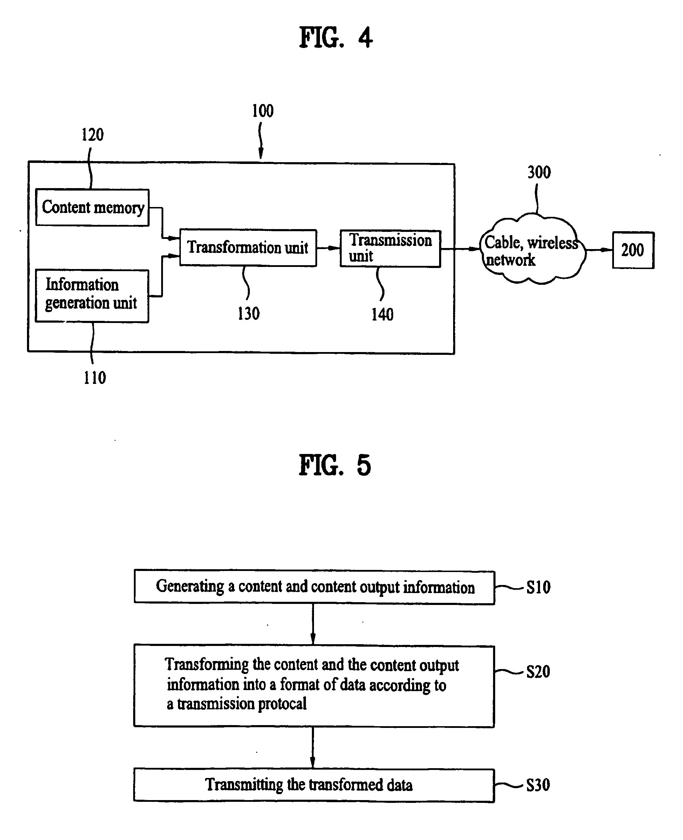

Fig. 4 illustrates an apparatus 100 for transmitting content in accordance with an embodiment of the present invention. Herein, the embodiment of the apparatus for transmitting the content is disclosed, with reference to Fig. 4. The apparatus 100 may include an information generating unit 110, a content memory 120, a transformation unit 130, and a transmission unit 140, all operatively coupled and configured. Also the apparatus 100 may be viewed as a transmitter or a content transmitter.

The information generating unit 110 generates content output information for content which shall be transmitted to an apparatus 200 via, e.g., a network, cable, or any other known medium for transmission 300. The content output information may include information as discussed above in connection with Fig. 2 and can also be transmitted to the apparatus 200 in the data structure and protocol of Figs. 1 and 3. For instance, the content output information can include information on whether or not the content shall be outputted. And, the content output information may include at least one of the following: an identifier indicating a kind of the content output event, an identifier indicating a dimension of an image included in the content, an identifier indicating one or more properties of the content, an identifier indicating a number of files of a file group if the content includes the file group, an identifier indicating a serial number of the respective files if the file group includes two or more files, an identifier indicating an interval between contents to be outputted by content groups if the content includes two or more file groups, and an identifier indicating a serial number of the respective file groups if the content includes two or more file groups.

The content memory 120 stores content files to be transmitted. The stored content files may be generated in the apparatus 100 of Fig. 4, or may be received from an external source. The transformation unit 130 transforms the stored content and the content output information generated from the information generation unit 110 into a format of data. The transformation format may follow a broadcast protocol as a cable or a wireless network. In other word, the transformation unit 130 can transform the content and the content output information into a transformation format as a physical layer of a network.

The data format can follow a broadcast transmission format such as a terrestrial, a satellite, or a cable broadcast. The transmission unit 140 can transmit the transformed data into the transmitting medium 300 such as a cable network, a wireless network, the Internet, an extranet, an intranet, etc.

Fig. 5 is a flow chart illustrating a method for transmitting content in accordance with an embodiment of the present invention. With reference to Fig. 5, an embodiment of the method for transmitting content is described. This method can be implemented in and/or by the apparatus 100 or other suitable device/system.

First, content and content output information are generated (S10). For instance, the content output information can be generated by the information generation unit 110 and the content can be generated by the apparatus 100 or reconceived from another device. The content output information is already described in Fig. 2, Fig. 3A and Fig. 3B.

The content and the content output information are transformed into a format of transmitting data like the MOT protocol (S20), e.g., by the transformation unit 130.

And, the content and the content output information are transmitted as transmission data, e.g., by the transmitting unit 140 to a receiving apparatus 200 via the network 300 or others.

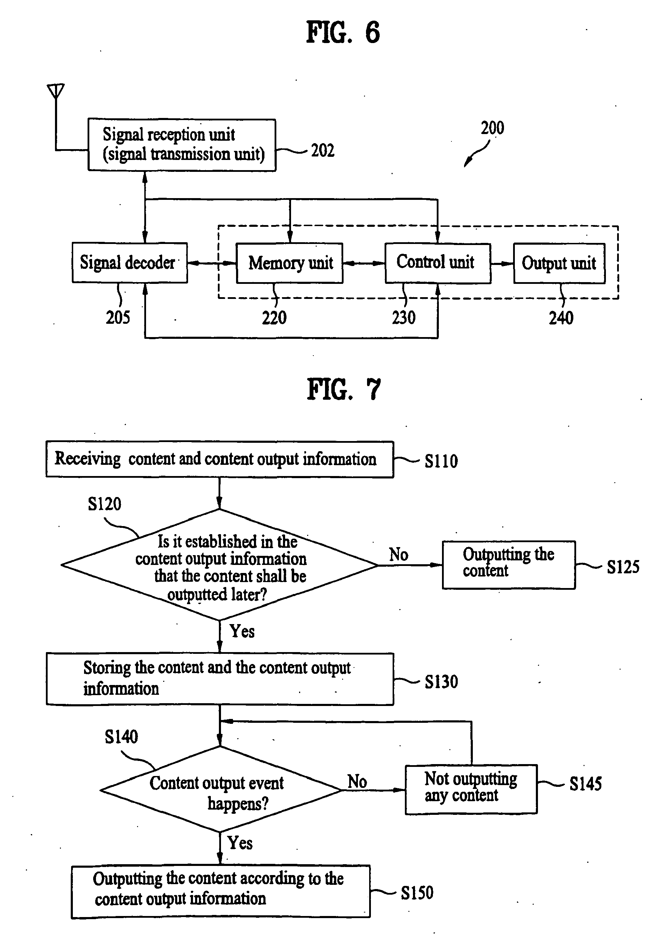

Fig. 6 shows an example of the apparatus 200 for receiving and outputting content in accordance with an embodiment of the present invention. The apparatus 200 receives and processes the content and the content output information transmitted from the apparatus 100. The apparatus 200 can also be viewed as a receiver or a content receiver.

According to an embodiment, the apparatus 200 in Fig. 6 includes a memory unit 220, a control unit 230, and an output unit 240, all operatively coupled and configured.

The memory unit 220 stores the content and content output information which are received via the transmitting medium 300 such as a cable network, a wireless network, etc.

The controller 230 determines whether a content output event has occurred, and if the content output event has occurred, the control unit 230 controls the output unit 240 to output the stored content according to the corresponding content output information. One or more content output events can be specified in the second field (b) of the received content output information as shown in Fig. 2 as discussed above, which can trigger the outputting of the content, but such content output event(s) can also be received independently of the content output information.

The output unit 240 outputs the content according to control signals of the control unit 230. A display panel that outputs a visual content and/or a speaker that outputs an audible content can be an example of the output unit 240. Also, the output unit 240 can be a display device capable of displaying the content in 2-dimensions or 3-dimensions. Any known technique can be used to display the content in 3-dimensions. For instance, the output unit 240 can include a display unit, and a switching panel unit disposed adjacent to the display unit and being selectively turned on/off to provide a 2- or 3-dimensional image. As discussed above, the content can be displayed in 2- or 3-dimensions based on the information stored in the third field (c) of Fig. 2.

If the apparatus 200 receives a signal by a wireless communication system, the apparatus 200 may further include a signal reception unit 202 and a signal decoder 205. Other components can also be included in the apparatus 200.

For example, if the apparatus 200 is a mobile communication terminal, the apparatus 200 may include a first signal reception unit for receiving broadcast signals, and a second reception unit for receiving communication signals respectively. In Fig. 6, the signal reception unit 202 may be the first signal reception unit, for receiving the content and the content output information transmitted in broadcast signals. As a variation, the signal reception unit 202 may be the second signal reception unit, for receiving the content and the content output information transmitted in communication signals.

If the signal reception unit 202 has a duplex function, the signal reception unit 202 can also transmit data and can be referred to as a signal transmission unit or transceiver. A separate transmitter can also be provided in the apparatus 200.

The signal decoder 205 decodes the content, which the signal reception unit 202 receives, or which is stored in the memory unit 220.

The signal decoder 205 outputs the decoded content to a buffer (not shown in Fig. 6) or memory unit 220 again.

The controller 230 determines whether or not a content event occurs. And if each of the content event(s) defined in the content output information, happens, the control unit 210 outputs the corresponding stored content via the output unit 240 in accordance with other pieces of the content output information.

The content output event can be, but is not limited to, an event of translating the program channel, an event of turning on/off of the terminal, an event of trying a connection with a wireless network, or an event of alarming the receipt of communication signals, etc.

The apparatus of Fig. 6 can be a TV such as a digital TV, a mobile communication terminal, etc. And the mobile communication terminal can be, but is not limited to, a mobile phone, a smart phone, a PDA, a PMP, a DMB terminal, etc. and can include other known components such as a display unit, a controller, etc.

Since the apparatus for outputting content according to the present invention, outputs the transmitted content according to the content output information, whether the apparatus outputs the content, is subject to the content output information received from the content transmitter.

Accordingly, the apparatus for outputting content according to the present invention makes it possible for the content transmitter to control whether or not the content receiver outputs the transmitted content, by transmitting the content output information together with the corresponding content.

To describe the present invention easily, an example where the apparatus 200 according to the present invention is a mobile communication terminal, the content is a broadcast advertisement content, and a user watches the broadcast at the terminal is discussed below. In that example, it is also assumed that the mobile communication terminal receives the content from a first broadcast station through a broadcast network.

The mobile communication terminal receives the content and the content output information transmitted from the first broadcast station through the broadcast network, and stores the same. If the user transits from a program (or channel), which the first broadcast station sends, into another program (or channel), which a second broadcast station sends, the terminal can display the advertisement content according to the content output information, which is received from the first broadcast station, preferably just during the channel/program transition.

In another example, if the terminal turns off, the advertisement content, which is received from the first broadcast station, is displayed according to the content output information during the turn-off time of the terminal. The advertisement content may be a visual content like image files of a slide show, or an audio content like a music file.

As described above, if a conventional terminal performs DVR function, the terminal may display only broadcast programs excluding advertisements from the received broadcast. But, according to the preferred embodiments of the present invention, the content transmitter makes it possible for the content receiver to output advertisement content according to content output information, when a certain content output events happens to the content receiver. Therefore, the content transmitter can control whether or not the content is outputted at the receiver as well as the manner in which the content is outputted at the receiver.

In still another example, multiple contents and content output information can also be transmitted to the receiver. For instance, a first broadcast station transmits first advertisement content and first content output information, and a second broadcast station transmits second advertisement content and second content output information.

The mobile communication terminal outputs the first advertisement content, which is received from the first broadcast station, in a case that the terminal receives a broadcast program from the first broadcast station and a specified content output event happens to the terminal.

Similarly, the terminal outputs the second advertisement content, which is received from the second broadcast station, in another case that the terminal receives a broadcast program from the second broadcast station and a specified content output event happens to the terminal.

And if, while the terminal outputs the broadcast program from the first broadcast station, the terminal transits from the existing program channel into another program channel which the second broadcast station broadcasts, the terminal can output the first advertisement content according to the first content output information, because the terminal has received the content from the first broadcast station before the channel transition.

In another example, only the first broadcast station transmits advertisement content and the second broadcast station dose not transmit advertisement content. Then the mobile communication terminal outputs the first advertisement content, which has been received from the first broadcast station, in a case that the terminal receives a broadcast program from the first broadcast station and a specified content output event happens to the terminal. And, if the terminal transits from a first channel from the first broadcast station into a second channel from the second broadcast station, the terminal outputs the first advertisement content according to the content output information, during the content output event being the channel transition.

However, the terminal outputs again advertisement content, which has been received from the first broadcast station, when the terminal transits from the second channel to the first channel. And, the outputted advertisement content may be content which is received recently from the first broadcast station, or content which is outputted most frequently in the terminal, or specific content determined by the content transmitter.

As described above, the content, which is selectively outputted according to the content output information, can be varied with the content output information which the content transmitter establishes. Accordingly, the content output information may be a sort of control information which can control the terminal for receiving the content to output the content under certain circumstances.

Fig. 7 shows a method for outputting content in accordance with an embodiment of the present invention. With reference to Fig. 7, an embodiment of the method for outputting content in accordance with the present invention is described. This method can be implemented in and/or by the apparatus 200 or other suitable device/system.

First, a signal including content and content output information is received (S110). The content and the content output information corresponding to the content can be received, e.g., via the signal reception unit 202.

And, it is determined that information about whether or not the content is to be outputted (e.g., whether the value of the first field (a) in the example of Fig. 2 is 1 or not), is established in the received content output information (S120). For instance, the control unit 230 can make this determination.

If the information representing whether or not the received content is to be outputted, is not established in the content output information (S120, NO), the received content may not be stored in the memory unit 220 and the content may be outputted on the output unit 240 immediately (S125).

However, as a variation, in a case that the content is transmitted in a sub-channel like a data channel, though the flow in Fig. 7 follows, the content may be not displayed in S125.

If the information representing whether or not the content is to be outputted, is established in the content output information (S120, YES), the received content and the content output information are stored, e.g., in the memory unit 220 (S130).

And it is determined whether the specified content output event occurs (S140). If the content output event does not occur in the apparatus 200 (S140, NO), the stored content is not outputted (S145). But, if the content output event occurs (S140, YES), the stored content is outputted according to the content output information, e.g., at the output unit 240 under control of the control unit 230 (S150).

According to the present invention, the content transmitting side controls whether or not the transmitting content is outputted in the content receiver, and the content user can accept the content if a certain event happens at the content receiver.

It will be apparent to those skilled in the art that various modifications and variations can be made in the present invention without departing from the scope of the inventions. Thus, it is intended that the present invention covers the modifications and variations of this invention provided they come within the scope of the appended claims.

## Claims

1. A method for transmitting content, the method comprising:
generating (S10) content output information used to control a displaying method of the content at a receiver's side; and
transmitting (S30) the content and the content output information as transmission data,
wherein the content output information defines an output condition of the content to be selectively outputted at the receiver's side when a content output trigger condition is satisfied at the receiver's side,
**characterized in that**
the content includes at least one of groups of files,
the content output information includes:
- a first identifier (a) indicating whether or not the content is to be outputted in the receiver,
- a second identifier (b) identifying at least one content output trigger condition,
- a third identifier (c) indicating whether the transmitted content is a 2-dimensional content or a 3-dimensional content,
- a fifth identifier (e) indicating a number of files in a group of files, and
- a sixth identifier (h) indicating a serial number of one of the groups of files, if the content includes two or more groups of files,
and when the transmitted content is the 3-dimensional content, the content output information further includes a fourth identifier (f) indicating serial numbers (f), where odd numbers of the serial numbers represent left eye images and even numbers of the serial numbers represent right eye images or the even numbers of the serial numbers represent left eye images and the odd numbers of the serial numbers represent right eye images, and
the content output trigger condition is a signal power of the receiver's side going down below a predetermined threshold value.

2. The method of claim 1, wherein the content includes at least one of the following:
an advertisement, a still image, text, an icon, a logo, graphics, and audio data.

3. A method for outputting content by a receiver of the content, the method comprising:
receiving (S110) content and content output information used to control a displaying method of the content;
storing (S130) the content and the content output information, wherein the content output information defines an output condition of the content; and
selectively outputting (S150), by the receiver, the content in accordance with the content output information when a content output trigger condition is satisfied ,
**characterized in that**
the content includes at least one of groups of files,
the content output information includes:
- a first identifier (a) indicating whether or not the content is to be outputted in the receiver,
- a second identifier (b) identifying at least one content output trigger condition,
- a third identifier (c) indicating whether the transmitted content is a 2-dimensional content or a 3-dimensional content,
- a fifth identifier (e) indicating a number of files in a groups of files, and
- a sixth identifier (h) indicating a serial number of one of the groups of files, if the content includes two or more groups of files,
when the transmitted content is the 3-dimensional content, the content output information further includes a fourth identifier (f) indicating serial numbers (f), where odd numbers of the serial numbers represent left eye images and even numbers of the serial numbers represent right eye images or the even numbers of the serial numbers represent left eye images and the odd numbers of the serial numbers represent right eye images, and
the content output trigger condition is a signal power of the receiver's side going down below a predetermined threshold value.

4. The method of claim 3, wherein the content includes at least one of the following: an advertisement, a still image, text, an icon, a logo, graphics, and audio data.

5. The method of claim 3, wherein the content is an advertisement.

6. An apparatus (100) for transmitting content, the apparatus comprising:
a memory unit (120) configured to store content;
a content information generating unit (110) configured to generate content output information used to control a displaying method of the content at a receiver's side; and
a transmission unit (140) configured to transmit the content and the content output information as transmission data,
wherein the content output information defines an output condition of the content to be selectively outputted at the receiver's side when a content output trigger condition is satisfied at the receiver's side,
**characterized in that**
the content includes at least one of groups of files,
the content output information includes:
- a first identifier (a) indicating whether or not the content is to be outputted in the receiver,
- a second identifier (b) identifying at least one content output trigger condition,
- a third identifier (c) indicating whether the transmitted content is a 2-dimensional content or a 3-dimensional content,
- a fifth identifier (e) indicating a number of files in a group of files, and
- a sixth identifier (h) indicating a serial number of one of the groups of files, if the content includes two or more groups of files,
when the transmitted content is the 3-dimensional content, the content output information further includes a fourth identifier (f) indicating serial numbers (f), where odd numbers of the serial numbers represent for left eye images and even numbers of the serial numbers represent right eye images or the even numbers of the serial numbers represent left eye images and the odd numbers of the serial numbers represent right eye images, and
the content output trigger condition is a signal power of the receiver's side going down below a predetermined threshold value.

7. The apparatus of claim 6, wherein the content includes at least one of the following: an advertisement, a still image, text, an icon, a logo, graphics, and audio data.

8. An apparatus (200) for outputting content by a receiver of the content, the apparatus comprising:
a signal reception unit (202) configured to receive the content and content output information used to control a displaying method of the content at the receiver's side;
a memory unit (220) configured to store the content output information and the content wherein the content output information defines an output condition of the content;
a control unit (230) configured to control an output unit (240) to selectively output the content in accordance with the content output information when a content output trigger condition occurs; and
the output unit (240) configured to output the content under control of the control unit,
**characterized in that**
the content includes at least one of groups of files,
the content output information includes:
- an identifier a first identifier (a) indicating whether or not the content is to be outputted in the receiver,
- a second identifier (b) identifying at least one content output trigger condition,
- a third identifier (c) indicating whether the transmitted content is a 2-dimensional content or a 3-dimensional content,
- a fifth identifier (e) indicating a number of files in the group of files, and
- a sixth identifier (h) indicating a serial number of one of the groups of files, if the content includes two or more groups of files,
when the transmitted content is the 3-dimensional content, the content output information further includes a fourth identifier (f) indicating serial numbers (f), where odd numbers of the serial numbers represent left eye images and even numbers of the serial numbers represent right eye images or the even numbers of the serial numbers represent left eye images and the odd numbers of the serial numbers represent right eye images, and
the content output trigger condition is a signal power of the receiver's side going down below a predetermined threshold value.

9. The apparatus of claim 8, wherein the apparatus is a mobile communication terminal.

10. The apparatus of claim 8, wherein the content includes at least one of the following: an advertisement, a still image, text, an icon, a logo, graphics, and audio data.

11. The apparatus of claim 8, wherein the content is an advertisement.

## Patentansprüche

1. Verfahren zum Senden von Inhalt, wobei das Verfahren umfasst:
Erzeugen (S10) von Inhaltsausgabeinformationen, die verwendet werden, um ein Anzeigeverfahren des Inhalts auf Seiten eines Empfängers zu steuern; und
Senden (S30) des Inhalts und der Inhaltsausgabeinformationen als Sendedaten,
wobei die Inhaltsausgabeinformationen eine Ausgabebedingung des Inhalts definieren, der selektiv auf Seiten des Empfängers auszugeben ist, wenn eine Inhaltsausgabeauslösebedingung auf Seiten des Empfängers erfüllt ist,
**dadurch gekennzeichnet, dass**
der Inhalt zumindest eine Gruppe von Dateien umfasst,
die Inhaltsausgabeinformationen umfassen:
- eine erste Kennung (a), die angibt, ob der Inhalt in dem Empfänger auszugeben ist oder nicht,
- eine zweite Kennung (b), die zumindest eine Inhaltsausgabeauslösebedingung identifiziert,
- eine dritte Kennung (c), die angibt, ob der gesendete Inhalt ein 2-dimensionaler Inhalt oder ein 3-dimensionaler Inhalt ist,
- eine fünfte Kennung (e), die eine Anzahl von Dateien in einer Gruppe von Dateien angibt, und
- eine sechste Kennung (h), die eine Seriennummer von einer der Gruppen von Dateien angibt, falls der Inhalt zwei oder mehr Gruppen von Dateien umfasst,
und falls der gesendete Inhalt der 3-dimensionale Inhalt ist, die Inhaltsausgabeinformationen weiterhin eine vierte Kennung (f) umfassen, die Seriennummern (f) angibt, wobei ungerade Zahlen der Seriennummern Bilder für das linke Auge darstellen und gerade Zahlen der Seriennummern Bilder für das rechte Auge darstellen, oder die geraden Zahlen der Seriennummern Bilder für das linke Auge darstellen und die ungeraden Zahlen der Seriennummern Bilder für das rechte Auge darstellen, und
die Inhaltsausgabeauslösebedingung darin besteht, dass eine Signalenergie auf Seiten des Empfängers unterhalb eines vorbestimmten Schwellwerts absinkt.

2. Verfahren gemäß Anspruch 1, wobei der Inhalt zumindest eines der folgenden umfasst:
eine Werbung, ein Stehbild, Text, ein Piktogramm, ein Logo, Grafiken und Audiodaten.

3. Verfahren zur Ausgabe von Inhalt durch einen Empfänger des Inhalts, wobei das Verfahren umfasst:
Empfangen (S110) von Inhalt und Inhaltsausgabeinformationen, die verwendet werden, um ein Anzeigeverfahren des Inhalts zu steuern;
Speichern (S130) des Inhalts und der Inhaltsausgabeinformationen, wobei die Inhaltsausgabeinformationen eine Ausgabebedingung des Inhalts definieren; und
selektives Ausgeben (S150), durch den Empfänger, des Inhalts gemäß den Inhaltsausgabeinformationen, wenn eine Inhaltsausgabeauslösebedingung erfüllt ist,
**dadurch gekennzeichnet, dass**
der Inhalt zumindest eine Gruppe von Dateien umfasst,
die Inhaltsausgabeinformationen umfassen:
- eine erste Kennung (a), die angibt, ob der Inhalt in dem Empfänger auszugeben ist oder nicht,
- eine zweite Kennung (b), die zumindest eine Inhaltsausgabeauslösebedingung identifiziert,
- eine dritte Kennung (c), die angibt, ob der gesendete Inhalt ein 2-dimensionaler Inhalt oder ein 3-dimensionaler Inhalt ist,
- eine fünfte Kennung (e), die eine Anzahl von Dateien in einer Gruppe von Dateien angibt, und
- eine sechste Kennung (h), die eine Seriennummer von einer der Gruppen von Dateien angibt, falls der Inhalt zwei oder mehr Gruppen von Dateien umfasst,
wenn der gesendete Inhalt der 3-dimensionale Inhalt ist, die Inhaltsausgabeinformationen weiterhin eine vierte Kennung (f) umfassen, die Seriennummern (f) angibt, wobei ungerade Zahlen der Seriennummern Bilder für das linke Auge darstellen und gerade Zahlen der Seriennummern Bilder für das rechte Auge darstellen oder die geraden Zahlen der Seriennummern Bilder für das linke Auge darstellen und die ungeraden Zahlen der Seriennummern Bilder für das rechte Auge darstellen, und
die Inhaltsausgabeauslösebedingung darin besteht, dass eine Signalenergie auf Seiten des Empfängers unterhalb eines vorbestimmten Schwellwerts absinkt.

4. Verfahren gemäß Anspruch 3, wobei der Inhalt zumindest eines der folgenden umfasst: eine Werbung, ein Stehbild, Text, ein Piktogramm, ein Logo, Grafiken und Audiodaten.

5. Verfahren gemäß Anspruch 3, wobei der Inhalt eine Werbung ist.

6. Vorrichtung (100) zum Senden von Inhalt, wobei die Vorrichtung umfasst:
eine Speichereinheit (120), die konfiguriert ist, um Inhalt zu speichern;
eine Inhaltsinformationserzeugungseinheit (110), die konfiguriert ist, um Inhaltsausgabeinformationen zu erzeugen, die verwendet werden, um ein Anzeigeverfahren des Inhalts auf Seiten des Empfängers zu steuern; und
eine Sendeeinheit (140), die konfiguriert ist, um den Inhalt und die Inhaltsausgabeinformationen als Sendedaten zu senden,
wobei die Inhaltsausgabeinformationen eine Ausgabebedingung des Inhalts definieren, der selektiv auf Seiten des Empfängers auszugeben ist, wenn eine Inhaltsausgabeauslösebedingung auf Seiten des Empfängers erfüllt ist,
**dadurch gekennzeichnet, dass**
der Inhalt zumindest eine Gruppe von Dateien umfasst,
die Inhaltsausgabeinformationen umfassen:
- eine erste Kennung (a), die angibt, ob der Inhalt in dem Empfänger auszugeben ist oder nicht,
- eine zweite Kennung (b), die zumindest eine Inhaltsausgabeauslösebedingung identifiziert,
- eine dritte Kennung (c), die angibt, ob der gesendete Inhalt ein 2-dimensionaler Inhalt oder ein 3-dimensionaler Inhalt ist,
- eine fünfte Kennung (e), die eine Anzahl von Dateien in einer Gruppe von Dateien angibt, und
- eine sechste Kennung (h), die eine Seriennummer von einer der Gruppen von Dateien angibt, falls der Inhalt zwei oder mehr Gruppen von Dateien umfasst,
wenn der gesendete Inhalt der 3-dimensionale Inhalt ist, die Inhaltsausgabeinformationen weiterhin eine vierte Kennung (f) umfassen, die Seriennummern (f) angibt, wobei ungerade Zahlen der Seriennummern Bilder für das linke Auge darstellen und gerade Zahlen der Seriennummern Bilder für das rechte Auge darstellen oder die geraden Zahlen der Seriennummern Bilder für das linke Auge darstellen und die ungeraden Zahlen der Seriennummern Bilder für das rechte Auge darstellen, und
die Inhaltsausgabeauslösebedingung darin besteht, dass eine Signalenergie auf Seiten des Empfängers unterhalb eines vorbestimmten Schwellwerts absinkt.

7. Vorrichtung gemäß Anspruch 6, wobei der Inhalt zumindest eines der folgenden umfasst: eine Werbung, ein Stehbild, Text, ein Piktogramm, ein Logo, Grafiken und Audiodaten.

8. Vorrichtung (200) zur Ausgabe von Inhalt durch einen Empfänger des Inhalts, wobei die Vorrichtung umfasst:
eine Signalempfangseinheit (202), die konfiguriert ist, um den Inhalt und Inhaltsausgabeinformationen zu empfangen, die verwendet werden, um ein Anzeigeverfahren des Inhalts auf Seiten des Empfängers zu steuern;
eine Speichereinheit (220), die konfiguriert ist, um die Inhaltsausgabeinformationen und den Inhalt zu speichern, wobei die Inhaltsausgabeinformationen eine Ausgabebedingung des Inhalts definieren;
eine Steuereinheit (230), die konfiguriert ist, um eine Ausgabeeinheit (240) zu steuern, um selektiv den Inhalt gemäß den Inhaltsausgabeinformationen auszugeben, wenn eine Inhaltsausgabeauslösebedingung auftritt; und
die Ausgabeeinheit (240), die konfiguriert ist, um den Inhalt unter der Steuerung der Steuereinheit auszugeben,
**dadurch gekennzeichnet, dass**
der Inhalt zumindest eine Gruppe von Dateien umfasst,
die Inhaltsausgabeinformationen umfassen:
- eine Kennung einer ersten Kennung (a), die angibt, ob der Inhalt in dem Empfänger auszugeben ist oder nicht,
- eine zweite Kennung (b), die zumindest eine Inhaltsausgabeauslösebedingung angibt,
- eine dritte Kennung (c), die angibt, ob der gesendete Inhalt ein 2-dimensionaler Inhalt oder ein 3-dimensionaler Inhalt ist,
- eine fünfte Kennung (e), die eine Anzahl von Dateien in der Gruppe von Dateien angibt, und
- eine sechste Kennung (h), die eine Seriennummer von einer der Gruppen von Dateien angibt, falls der Inhalt zwei oder mehr Gruppen von Dateien umfasst,
wenn der gesendete Inhalt der 3-dimensionale Inhalt ist, die Inhaltsausgabeinformationen weiterhin eine vierte Kennung (f) umfassen, die Seriennummern (f) angibt, wobei ungerade Zahlen der Seriennummern Bilder für das linke Auge darstellen und gerade Zahlen der Seriennummern Bilder für das rechte Auge darstellen oder die geraden Zahlen der Seriennummern Bilder für das linke Auge darstellen und die ungeraden Zahlen der Seriennummern Bilder für das rechte Auge darstellen, und
die Inhaltsausgabeauslösebedingung darin besteht, dass eine Signalenergie auf Seiten des Empfängers unterhalb eines vorbestimmten Schwellwertes absinkt.

9. Vorrichtung gemäß Anspruch 8, wobei die Vorrichtung ein Mobilkommunikationsendgerät ist.

10. Vorrichtung gemäß Anspruch 8, wobei der Inhalt zumindest eines der folgenden umfasst: eine Werbung, ein Stehbild, Text, ein Piktogramm, ein Logo, Grafiken und Audiodaten.

11. Vorrichtung gemäß Anspruch 8, wobei der Inhalt eine Werbung ist.

## Revendications

1. Procédé de transmission de contenu, le procédé comprenant :
la génération (S10) d'une information de délivrance en sortie de contenu utilisée pour contrôler un procédé d'affichage du contenu au niveau d'un côté de récepteur ; et
la transmission (S30) du contenu et de l'information de délivrance en sortie de contenu comme données de transmission,
dans lequel l'information de délivrance en sortie de contenu définit une condition de délivrance en sortie du contenu destiné à être sélectivement délivré en sortie au niveau du côté de récepteur lorsqu'une condition de déclenchement de délivrance en sortie de contenu est satisfaite au niveau du côté de récepteur,
**caractérisé en ce que**
le contenu inclut au moins un parmi des groupes de fichiers,
l'information de délivrance en sortie de contenu inclut :
- un premier identifiant (a) indiquant si le contenu doit être ou non délivré en sortie dans le récepteur,
- un deuxième identifiant (b) identifiant au moins une condition de déclenchement de délivrance en sortie de contenu,
- un troisième identifiant (c) indiquant si le contenu transmis est un contenu en 2 dimensions ou un contenu en 3 dimensions,
- un cinquième identifiant (e) indiquant un nombre de fichiers dans un groupe de fichiers, et
- un sixième identifiant (h) indiquant un numéro de série d'un des groupes de fichiers, si le contenu inclut deux groupes de fichiers ou plus,
et lorsque le contenu transmis est le contenu en 3 dimensions, l'information de délivrance en sortie de contenu inclut en outre un quatrième identifiant (f) indiquant des numéros de série (f), où des numéros impairs parmi les numéros de série représentent des images pour l'oeil gauche et des numéros pairs parmi les numéros de série représentent des images pour l'oeil droit, ou bien les numéros pairs parmi les numéros de série représentent des images pour l'oeil gauche et les numéros impairs parmi les numéros de série représentent des images pour l'oeil droit, et
la condition de déclenchement de délivrance en sortie de contenu est une puissance de signal du côté de récepteur passant en-dessous d'une valeur de seuil prédéterminée.

2. Procédé selon la revendication 1, dans lequel le contenu inclut au moins un parmi les suivants :
une publicité, une image fixe, un texte, une icône, un logo, un graphique et des données audio.

3. Procédé de délivrance en sortie de contenu par un récepteur du contenu, le procédé comprenant :
la réception (S110) d'un contenu et d'une information de délivrance en sortie de contenu utilisée pour contrôler un procédé d'affichage du contenu ;
le stockage (S130) du contenu et de l'information de délivrance en sortie de contenu, dans lequel l'information de délivrance en sortie de contenu définit une condition de délivrance en sortie du contenu ; et
la délivrance en sortie sélective (S150), par le récepteur, du contenu conformément à l'information de délivrance en sortie de contenu lorsqu'une condition de déclenchement de délivrance en sortie de contenu est satisfaite,
**caractérisé en ce que**
le contenu inclut au moins un parmi des groupes de fichiers,
l'information de délivrance en sortie de contenu inclut :
- un premier identifiant (a) indiquant si le contenu doit être ou non délivré en sortie dans le récepteur,
- un deuxième identifiant (b) identifiant au moins une condition de déclenchement de délivrance en sortie de contenu,
- un troisième identifiant (c) indiquant si le contenu transmis est un contenu en 2 dimensions ou un contenu en 3 dimensions,
- un cinquième identifiant (e) indiquant un nombre de fichiers dans un groupe de fichiers, et
- un sixième identifiant (h) indiquant un numéro de série d'un des groupes de fichiers, si le contenu inclut deux groupes de fichiers ou plus,
lorsque le contenu transmis est le contenu en 3 dimensions, l'information de délivrance en sortie de contenu inclut en outre un quatrième identifiant (f) indiquant des numéros de série (f), où des numéros impairs parmi les numéros de série représentent des images pour l'oeil gauche et des numéros pairs parmi les numéros de série représentent des images pour l'oeil droit, ou bien les numéros pairs parmi les numéros de série représentent des images pour l'oeil gauche et les numéros impairs parmi les numéros de série représentent des images pour l'oeil droit, et
la condition de déclenchement de délivrance en sortie de contenu est une puissance de signal du côté de récepteur passant en-dessous d'une valeur de seuil prédéterminée.

4. Procédé selon la revendication 3, dans lequel le contenu inclut au moins un parmi les suivants :
une publicité, une image fixe, un texte, une icône, un logo, un graphique et des données audio.

5. Procédé selon la revendication 3, dans lequel le contenu est une publicité.

6. Appareil (100) pour transmettre un contenu, l'appareil comprenant :
une unité (120) de mémoire configurée pour stocker un contenu ;
une unité (110) de génération d'information de contenu configurée pour générer une information de délivrance en sortie de contenu utilisée pour contrôler un procédé d'affichage du contenu au niveau d'un côté de récepteur ; et
une unité (140) de transmission configurée pour transmettre le contenu et l'information de délivrance en sortie de contenu comme données de transmission,
dans lequel l'information de délivrance en sortie de contenu définit une condition de délivrance en sortie du contenu destiné à être sélectivement délivré en sortie au niveau du côté de récepteur lorsqu'une condition de déclenchement de délivrance en sortie de contenu est satisfaite au niveau du côté de récepteur,
**caractérisé en ce que**
le contenu inclut au moins un parmi des groupes de fichiers,
l'information de délivrance en sortie de contenu inclut :
- un premier identifiant (a) indiquant si le contenu doit être ou non délivré en sortie dans le récepteur,
- un deuxième identifiant (b) identifiant au moins une condition de déclenchement de délivrance en sortie de contenu,
- un troisième identifiant (c) indiquant si le contenu transmis est un contenu en 2 dimensions ou un contenu en 3 dimensions,
- un cinquième identifiant (e) indiquant un nombre de fichiers dans un groupe de fichiers, et
- un sixième identifiant (h) indiquant un numéro de série d'un des groupes de fichiers, si le contenu inclut deux groupes de fichiers ou plus,
lorsque le contenu transmis est le contenu en 3 dimensions, l'information de délivrance en sortie de contenu inclut en outre un quatrième identifiant (f) indiquant des numéros de série (f), où des numéros impairs parmi les numéros de série représentent des images pour l'oeil gauche et des numéros pairs parmi les numéros de série représentent des images pour l'oeil droit, ou bien les numéros pairs parmi les numéros de série représentent des images pour l'oeil gauche et les numéros impairs parmi les numéros de série représentent des images pour l'oeil droit, et
la condition de déclenchement de délivrance en sortie de contenu est une puissance de signal du côté de récepteur passant en-dessous d'une valeur de seuil prédéterminée.

7. Appareil selon la revendication 6, dans lequel le contenu inclut au moins un parmi les suivants : une publicité, une image fixe, un texte, une icône, un logo, un graphique et des données audio.

8. Appareil (200) pour délivrer en sortie un contenu par un récepteur du contenu, l'appareil comprenant :
une unité (202) de réception de signaux configurée pour recevoir le contenu et une information de délivrance en sortie de contenu utilisée pour contrôler un procédé d'affichage du contenu au niveau du côté de récepteur ;
une unité (220) de mémoire configurée pour stocker l'information de délivrance en sortie de contenu et le contenu, dans lequel l'information de délivrance en sortie de contenu définit une condition de délivrance en sortie du contenu ;
une unité (230) de contrôle configurée pour contrôler une unité (240) de délivrance en sortie pour délivrer sélectivement en sortie le contenu conformément à l'information de délivrance en sortie de contenu lorsqu'une condition de déclenchement de délivrance en sortie de contenu apparaît ; et
l'unité (240) de délivrance en sortie configurée pour délivrer en sortie le contenu sous le contrôle de l'unité de contrôle,
**caractérisé en ce que**
le contenu inclut au moins un parmi des groupes de fichiers,
l'information de délivrance en sortie de contenu inclut :
- un premier identifiant (a) indiquant si le contenu doit être ou non délivré en sortie dans le récepteur,
- un deuxième identifiant (b) identifiant au moins une condition de déclenchement de délivrance en sortie de contenu,
- un troisième identifiant (c) indiquant si le contenu transmis est un contenu en 2 dimensions ou un contenu en 3 dimensions,
- un cinquième identifiant (e) indiquant un nombre de fichiers dans le groupe de fichiers, et
- un sixième identifiant (h) indiquant un numéro de série d'un des groupes de fichiers, si le contenu inclut deux groupes de fichiers ou plus,
lorsque le contenu transmis est le contenu en 3 dimensions, l'information de délivrance en sortie de contenu inclut en outre un quatrième identifiant (f) indiquant des numéros de série (f), où des numéros impairs parmi les numéros de série représentent des images pour l'oeil gauche et des numéros pairs parmi les numéros de série représentent des images pour l'oeil droit, ou bien les numéros pairs parmi les numéros de série représentent des images pour l'oeil gauche et les numéros impairs parmi les numéros de série représentent des images pour l'oeil droit, et
la condition de déclenchement de délivrance en sortie de contenu est une puissance de signal du côté de récepteur passant en-dessous d'une valeur de seuil prédéterminée.

9. Appareil selon la revendication 8, dans lequel l'appareil est un terminal de communication mobile.

10. Appareil selon la revendication 8, dans lequel le contenu inclut au moins un parmi les suivants : une publicité, une image fixe, un texte, une icône, un logo, un graphique, et des données audio.

11. Appareil selon la revendication 8, dans lequel le contenu est une publicité.
